# EUROPÄISCHE PATENTSCHRIFT

(11) **EP 2 270 402 B1**
(45) Veröffentlichungstag und Bekanntmachung des Hinweises auf die Patenterteilung: **19.09.2012**
(21) Anmeldenummer: 09008598.6
(22) Anmeldetag: 01.07.2009
(51) Int. Cl.: F24J 2/52

(54) **Kombination von solartechnischem Wannenkollektor und Montagebügel**
Combination of trough collector and mounting bracket
Combinaison de collecteur solaire à bac et étrier de montage

(43) Veröffentlichungstag der Anmeldung: 05.01.2011
(73) Patentinhaber: GREENoneTEC, 9300 St. Veit/Glan (AT)
(72) Erfinder: Hochreiter, Erwin, 9020 Klagenfurt (AT); Gamero, Antonio, 9020 Klagenfurt (AT); Koschier, Günter, 9314 Launsdorf (AT); Rankl, Heinz, 9321 Passering (AT)
(74) Vertreter: Becker, Thomas

(56) Entgegenhaltungen:
- WO-A1-03/098126
- DE-U1-202004 015 811
- DE-U1-202007 016 861
- JP-A- 11 324 259
- JP-A- 2000 179 106
- US-A1- 2008 302 928

## Beschreibung

Gegenstand der Erfindung ist eine Kombination von mindestens einem solartechnischen Wannenkollektor und einem Montagebügel zur Befestigung des Wannenkollektors mit einer transparenten Abdeckung an einer Schiene.

Insoweit ist der Gegenstand der Erfindung Bestandteil eines komplexen Installations- und Befestigungssystems für solartechnische Wannen-Kollektoren die beispielsweise auf einem Dach, in einem Dach, auf oder in einer Gebäudefassade installiert werden.

Die genannten Kollektoren weisen häufig ein flaches, quaderförmiges Gehäuse mit Abmessungen (Breite, Länge, Höhe) von circa 100 x 200 x 10 cm auf.

Bisherige Befestigungssysteme sind weitestgehend starr und können die lokalen konstruktiven Vorgaben nicht berücksichtigen. Im Ergebnis werden Kollektoren häufig schief und optisch unzureichend montiert. Ein weiterer Nachteil ist, dass bekannte Befestigungsmittel nur mittels unterschiedlicher Werkzeuge installiert werden können. Für die Monteure bedeutet dies zusätzliche Schwierigkeiten, insbesondere bei der Dach- und Fassadenmontage.

Montagebügel der genannten Art sind beispielsweise aus folgenden Veröffentlichungen bekannt: DE 10 2007 053 376 A1, DE 20 2006 018 586 U1, AT 412 909 B.

Die WO03/098126 A1 zeigt ein Tragsystem für solartechnische Kollektoren, das auf einer Seite in einer Schiene befestigt wird und auf der anderen Seite eine Klemmplatte aufweist, die im Montagezustand mit ihrer flachen Unterseite auf der Oberseite des Kollektors aufliegen soll. Die Klemmplatte wird mit Flanschen, die nach unten abstehen und am Ende abgewinkelt sind, auf einer Schraube geführt und mit Hilfe einer Druckfeder gegen eine Hilfsvorrichtung (auxiliary support) abgestützt.

Die DE 20 2004 015 811 U1 offenbart eine Befestigungseinrichtung für Rahmenkollektoren, wobei Unterteil und Oberteil der Befestigungsvorrichtung mit Stegen verbunden sind, die bei der Montage über eine Sollbruchstelle brechen, so dass der Oberteil am Kollektorrahmen befestigt wird.

Aufgabe der Erfindung ist es, eine Möglichkeit anzugeben, mit einem konstruktiv einfachen Montagebügel einen Wannenkollektor zu befestigen, wobei der Bügel möglichst ohne oder mit einem einfachen Werkzeug montiert und vor Ort in die gewünschte Montageposition gebracht werden kann.

Zur Lösung schlägt die Erfindung eine Kombination von mindestens einem solartechnischen Wannenkollektor und einem Montagebügel zur Befestigung des Wannenkollektors an einer Schiene mit den Merkmalen des Anspruchs 1 vor.

Der Montagebügel ist so aufgebaut, dass er zwei Funktionsenden aufweist. Ein erstes Funktionsende dient der lösbaren Befestigung eines ersten Bauteils, nämlich des Wannen-Kollektors, ein zweites Funktionsende dient der lösbaren Befestigung des Montagebügels an einem zweiten Bauteil, nämlich der genannten Schiene. Dabei ist das zweite Funktionsende so gestaltet und ausgeführt, dass der Montagebügel an einer beliebigen Stelle in der Schiene ausgerichtet und festgelegt werden kann, während das erste Funktionsende ebenfalls eine individuelle Ausrichtung eines zugehörigen Bügelabschnitts zur Festlegung des Wannenkollektors ermöglicht. Damit ergibt sich sowohl eine Verstellbarkeit von Schiene und Montagebügel zueinander als auch eine Verstellbarkeit zwischen Montagebügel und Kollektor und damit eine Verstellbarkeit in mindestens zwei Richtungen des Koordinatensystems. Durch weitere Maßnahmen, die im einzelnen nachstehend erläutert werden, und die insbesondere die Ausbildung eines zugehörigen Stellorgans betreffen, kann darüber hinaus eine zumindest teilweise Verstellbarkeit in Richtung einer dritten Koordinate (z-Richtung) erreicht werden.

Das mindestens eine Auflager bildet eine Art Gegenlager zum ersten Sperrelement bei der Konfektionierung und Festlegung der Klammer.

Die Klammer selbst dient dazu, den Kollektor zu übergreifen und nach Einstellung der weiteren Bauteile des Montagebügels den Kollektor zu fixieren.

Das einzige Bauteil des Montagebügels, welches gegebenenfalls mit einem Werkzeug ausgerichtet werden muss, ist das Stellorgan. Dazu genügt ein einfacher Schraubenzieher oder ein Inbusschlüssel, je nach Ausführungsform.

Durch die erfindungsgemäße Gestaltung lässt sich der Montagebügel gegenüber der Schiene durch Verspannen des zweiten Sperrelements an der Schiene festlegen, ohne dass hierfür ein Werkzeug notwendig wäre.

Wie im Einzelnen anhand eines Ausführungsbeispieles nachstehend noch dargestellt wird kann das zweite Sperrelement in eine korrespondierende schlitzförmige Öffnung des zweiten Bauteils (der Schiene) eingeführt und danach um 90° gedreht werden, bis korrespondierende Abschnitte (seitliche Flügel) des zweiten Sperrelementes so positioniert sind, dass sie die genannte schlitzförmige Öffnung beidseitig überragen. Durch Verschiebung des zweiten Sperrelementes entlang der Mittenlängsachse des Stellorgans können dann die genannten Flügelabschnitte gegen korrespondierende Abschnitte der Schiene geführt werden, um die gewünschte Befestigung zu erreichen.

Durch das genannte mindestens eine Auflager und die sich darauf abstützende Klammer wird für den Montagebügel ein Gegenlager geschaffen, um sicherzustellen, dass das zweite Sperrelement sich nicht durch Gravitation oder Windlast oder dergleichen aus seiner Befestigungsposition lösen kann.

In diesem Zusammenhang ist zu erwähnen, dass das zu befestigende erste Bauteil (also der Wannen-Kollektor) auf dem zweiten Bauteil (also der Schiene) aufliegt, oder anders ausgedrückt: Der Montagebügel wird seitlich neben dem Kollektor auf der Schiene befestigt und die Klammer steht einseitig oder zweiseitig über den/die zu befestigenden Kollektor(en) vor, bevor sie über dem Kollektor (auf der, der Sonne zugewandten Oberseite des Kollektors) festgelegt wird.

Dabei ist das mindestens eine Auflager Bestandteil des Grundkörpers. Damit lässt sich die Zahl der Bauteile des Montagebügels reduzieren.

Unter Berücksichtigung der mechanischen Belastungen, die nach der Montage eines Kollektors auf diesen einwirken, ist sicherzustellen, dass eine weitestgehend spielfreie Fixierung des Kollektors auf der Schiene beziehungsweise am Montagebügel erreicht wird. Dazu sieht eine Ausführungsform der Erfindung vor, mindestens zwei, im Abstand angeordnete Auflager für die Klammer einzurichten. Diese Auflager (Gegenlager) sind dann vorteilhaft auf gegenüberliegenden Seiten des Stellorgans angeordnet, das heißt im Montagezustand des Montagebügels in Längsrichtung der korrespondierenden Schiene im Abstand zueinander auf gegenüberliegenden Seiten des Stellorgans.

Um mit ein und demselben Montagebügel Bauteile unterschiedlicher Größe befestigen zu können kann das zweite Sperrelement entlang des zweiten Endabschnitts des Stellorgans verstellbar angeordnet sein. Diese Verstellbarkeit ist eine Verstellbarkeit in Richtung der Mittenlängsachse des Stellorgans oder anders ausgedrückt: Eine Verstellbarkeit senkrecht zur Axialrichtung der Schiene. Damit werden insbesondere unterschiedliche Bauhöhen unterschiedlicher Kollektoren kompensiert.

Konkret ist vorgesehen, das zweite Sperrelement mit einer Öffnung auszubilden, wobei die Öffnung einen gewindeartigen Wandabschnitt aufweist, in die das Stellorgan mit einem korrespondierenden Gewindeabschnitt eingreift. Dabei kann die Öffnung als Sacköffnung mit Gewinde oder als Schlitzöffnung mit gegenüberliegenden gewindeartigen Wandabschnitten ausgeführt werden.
Die zuletzt genannte Ausführungsform wird im nachfolgenden Ausführungsbeispiel dargestellt.
Wenn das zweite Sperrorgan zwei, um 180° zueinander versetzt angeordnete Flügel aufweist, können diese Flügel mit Rastmitteln ausgebildet werden, die sich in Richtung auf den ersten Endabschnitt des Stellorgans erstrecken. Diese Rastmittel können endseitige Abkröpfungen an den Flügeln sein oder separat ausgebildete Nasen oder dergleichen.

Zur Ausrichtung des Montagebügels und zur Einstellung der finalen Montageposition sieht eine Ausführungsform vor, das Stellorgan in einem Abschnitt zwischen Grundkörper und erstem Sperrelement gefedert zu lagern. Eine solche Feder kann eine Spiral-Druckfeder sein. Die Feder drückt die auf dem Stellorgan montierte Klammer in der Montageposition nach oben und stützt sich am gegenüberliegenden Ende auf den Grundkörper ab. Die Form der Klammer richtet sich nach den lokalen Verhältnissen und insbesondere bezüglich des Abschnittes, mit dem das erste Bauteil (der Kollektor) festgelegt werden soll, nach dessen Geometrie. Dabei kann die Klammer im Wesentlichen die Form eines mehrfach abgewinkelten Streifens aufweisen. Es ergibt sich dann beispielsweise angenähert eine S-, Z- oder eine W-Form in einer Seitenansicht. Der Montagebügel ermöglicht es, einen Solar-Wannenkollektor ausschließlich im Randbereich der transparenten Abdeckung zu fixieren. Gleichzeitig erfüllt der Bügel dabei eine Sicherheitsfunktion, falls sich die Abdeckung oder Teile davon lösen sollten.

Das Stellorgan kann ein Stift, ein Bolzen oder eine Schraube sein. Bei einer Schraubenform wird beispielsweise das erste Sperrelement vom Kopf der Schraube und/oder einer korrespondierenden Scheibe gebildet, während ein Gewindeabschnitt am anderen Ende der Schraube zur Aufnahme des zweiten Sperrelementes und damit zur Festlegung des Montagebügels am zweiten Bauteil (der Schiene) dient.

Der Grundkörper kann ebenso wie das Stellorgan, das erste und/oder zweite Sperrelement sowie die Klammer aus Metall, beispielsweise Aluminium bestehen. Für den Grundkörper ist vorteilhaft eine Herstellung als Strangpressteil möglich. Mit dem gleichen Verfahren könnte der Grundkörper auch aus Kunststoff hergestellt werden. Gleiches gilt für die Klammer, die Sperrelemente sowie das Stellorgan.

Der Montagebügel kann spiegelbildlich gestaltet sein, und zwar in Bezug auf eine gedachte Ebene, die durch eine Mittenlängsachse des Stellorgans verläuft. Diese gedachte Ebene ist vorzugsweise eine Ebene, die senkrecht zur Axialrichtung des schienenförmigen zweiten Bauteils, also der Schiene, ausgerichtet ist.

Bei dieser Ausführungsform können mit einem Montagebügel zwei, im Abstand zueinander angeordnete Wannen-Kollektoren (erste Bauteile) gleichzeitig festgelegt werden. In eine Richtung übergreift die Klammer den einen Kollektor, in eine 180° gegenüberliegende Richtung einen zweiten Kollektor. Üblicherweise werden 4 Montagebügel pro Kollektor benötigt. Bei Verwendung dieses "Doppel-Bügels" genügen 6 Montagebügel für 2 Kollektoren.

Bei der Montage von Kollektoren, die am Ende eines Kollektorfeldes liegen genügt dem gegenüber die Verwendung eines Montagebügels mit einer Klammer, die nur einen Abschnitt zur Fixierung eines Kollektors aufweist.

Bei dieser Ausführungsform kann die Klammer mit einem freien Ende die Schiene seitlich abdecken, was optische Vorteile hat.
Um die Kollektoren sicher an der Schiene über die Montagebügel festzulegen und dabei die Kollektor-Oberfläche nicht zu beschädigen werden entsprechende Werkstoffe für die Klammer verwendet, beispielsweise Kunststoff oder Metall.

Zusätzlich ist vorgesehen, an dem Ende, welches einen Kollektor übergreift, eine in Richtung auf das zweite Sperrelement weisende Abkröpfung vorzusehen, die aus einem Material bestehen kann, welches eine gute Haftung (Auflage) gegenüber der Kollektor-Oberfläche gewährleistet, zum Beispiel Kautschuk oder Gummi.

Die Erfindung wird nachstehend anhand eines Ausführungsbeispieles näher erläutert. Dieses Ausführungsbeispiel bezieht sich auf einen Montagebügel zur Befestigung eines oder mehrerer solartechnischer Wannenkollektoren an einer zugehörigen Schiene.

Dabei zeigen:
- Figur 1:: Eine perspektivische Ansicht des Montagebügels in einer Ausführungsform zur Befestigung eines Kollektors,
- Figur 2:: Den Montagebügel nach Figur 1 in einer Seitenansicht,
- Figur 3:: Eine Seitenansicht 90° versetzt zur Ansicht nach Figur 2,
- Figur 4:: Eine Seitenansicht analog Figur 2 für einen Montagebügel zur Befestigung von zwei Kollektoren, die im Abstand zueinander angeordnet sind,
- Figur 5:: Eine perspektivische Teilansicht der Ausführungsform nach Figur 4 von oben.

In den Figuren sind gleiche oder gleich wirkende Bauteile mit gleichen Bezugsziffern dargestellt. Ortsangaben wie "oben, unten, rechts, links" beziehen sich auf die dargestellte Montageposition.

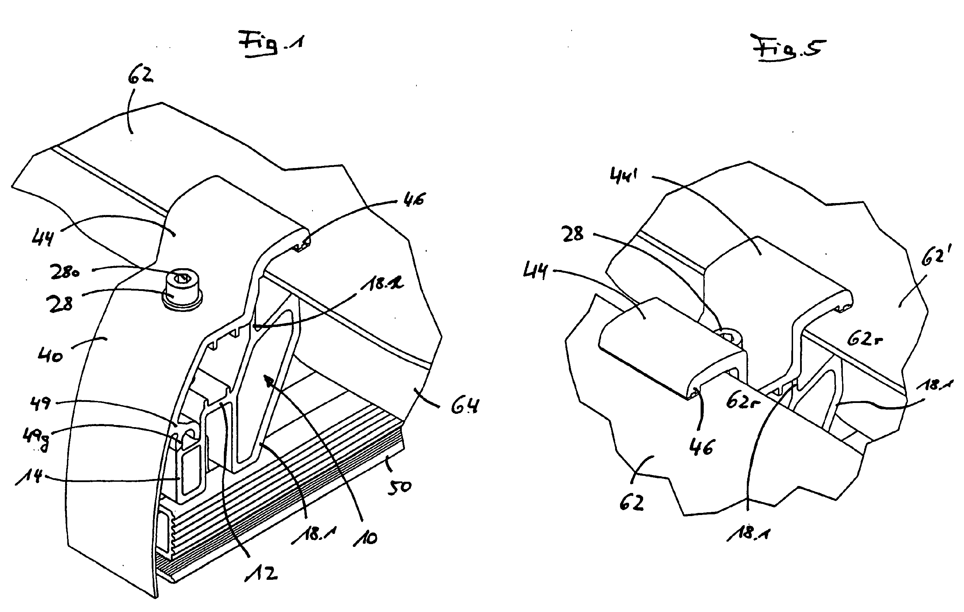

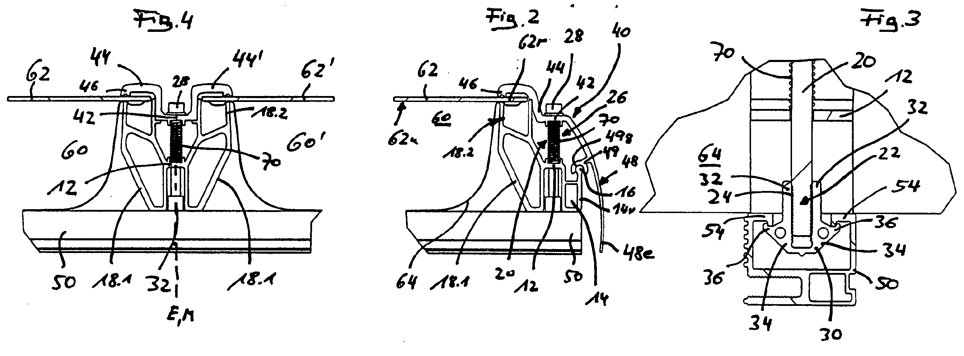

Der Montagebügel gemäß den Figuren 1 bis 3 ist wie folgt aufgebaut: Ein stranggegossener Grundkörper 10 aus Aluminium umfasst im Wesentlichen einen horizontal verlaufenden Steg 12, der hier etwa in der Mitte des Bügels 10 verläuft und auf einer Seite (in Figur 2: rechts) in einen kastenförmigen Abschnitt 14 übergeht. Der Kasten 14 weist außenseitig eine nach oben vorstehende Verlängerung 14v auf, die endseitig einen verdickten Abschnitt 16 besitzt.

Der kastenförmige Abschnitt 14 verläuft am unteren Ende (Figur 2) parallel zum Steg 12 und dieser Abschnitt liegt auf einer als zweites Bauteil 50 bezeichneten Schiene (in der Montageposition) auf.

Der Steg 12 ist gegenüberliegend zum kastenförmigen Abschnitt 14 materialschlüssig mit einem Abschnitt 18.1 verbunden, der in der Seitenansicht (Figur 2) eine Art Ringform aufweist, wobei ein unteres Ende abgeflacht ist und wiederum auf der Schiene 50 aufliegt, während sich nach oben hin ein in der Seitenansicht (Figur 2) U-förmiger Abschnitt 18.2 anschließt. Ein Schenkel (in Figur 2: links) liegt mit seinem freien Ende gegen eine Unterseite 62u eines Randabschnitts 62r einer Glasabdeckung 62 an. Die Glasabdeckung 62 ist Bestandteil eines Kollektors 60, dessen Rand 62r über eine zugehörige Kollektorwanne 64 vorsteht (in Figur 2: nach rechts).

Der Steg 12 des Grundkörpers 10 weist eine Öffnung auf, die von einem Stellorgan 20 durchgriffen wird, welches die Form einer Schraube hat.

Entsprechend weist das Stellorgan 20 am unteren (zweiten) Endabschnitt 22 ein Außengewinde 24 auf und am gegenüberliegenden ersten Endabschnitt 26 einen hutförmigen Schraubenkopf 28, der ein erstes Sperrelement bildet.

Mit dem Gewinde 24 greift das Stellorgan 20 in ein zweites Sperrelement 30 ein, dessen konstruktive Gestaltung sich insbesondere aus Figur 3 ergibt. Es besteht aus zwei, parallel zueinander und im Abstand verlaufenden Schenkeln 32, deren innenseitige Wandabschnitte geriffelt sind, um das Sperrorgan 30 am Gewinde 24 festzulegen. Je nach dem, wie weit das Stellorgan 20 in das zweite Sperrelement 30 eingeführt ist, ergibt sich implizit eine Justiermöglichkeit in Axialrichtung des Stellorgans 20.

Das zweite Sperrelement 30 weit am unteren Ende der Schenkel 32 seitliche Flügel 34 auf, die in der Seitenansicht (Figur 3) gemeinsam in etwa eine V-Form ergeben. An den freien Enden der Flügel 34 sind Rastmittel 36 zu erkennen, die sich in Richtung auf den ersten Endabschnitt 26 des Stellorgans strecken.

Das Stellorgan 20 durchgreift eine Klammer 40 entlang eines horizontal verlaufenden Abschnitts 42, wobei dieser Abschnitt 42 gegen eine Unterseite des hutförmigen Schraubenkopfs 28 anliegt.

In Axialrichtung der Schiene 50 schließt sich in eine Richtung (in Figur 2: nach links) ein hakenförmiger Abschnitt 44 der Klammer an, wobei dieser Abschnitt 44 an seinem freien Ende in einem nach unten abgekröpften Teil 46 übergeht, der in der Montageposition gegen die Glasabdeckung 62 des Kollektors 60 anliegt. Gegenüberliegend zum hakenförmigen Abschnitt 44, ebenfalls in Axialrichtung der Schiene 50, geht der horizontale Abschnitt 42 der Klammer 40 in einen bogenförmigen Abschnitt 48 über, dessen freies Ende 48e die Schiene 50 seitlich abdeckt.

In der Höhe des verdickten Abschnitts 16 der Verlängerung 14v des Grundkörpers 10 verläuft vom bogenförmigen Abschnitt 48 ein Ansatz 49, der an seinem freien Ende eine nach unten offene gabelartige Erweiterung 49g aufweist, die den verdickten Abschnitt 16 übergreift. Auf diese Weise stützt sich die Klammer 40 auf dem verdickten Abschnitt 16 ab, der so als Auflager wirkt.

Das Stellorgan 20 verläuft zwischen dem horizontalen Abschnitt 42 der Klammer 40 und dem Steg 12 koaxial zu und in einer Spiral-Druckfeder 70, die sich mit einem (unteren) Ende auf dem Steg 12 abstützt und mit dem anderen (oberen) gegen die Klammer 40 anliegt.

Im Folgenden wird die Befestigung des Kollektors 60 in der Schiene 50 erläutert.

Nachdem die Schiene 50 an einem Gebäude montiert ist wird der Kollektor 60 auf die Schiene 50 aufgesetzt. Danach wird der Montagebügel wie folgt montiert: Das Stellorgan 20 mit dem vormontierten Sperrelement 30 wird in eine schlitzförmige Öffnung 52 der Schiene 50 eingesetzt. Der Montagebügel und gleichzeitig das Sperrelement 30 wird/werden dann um 90° gedreht, bis das Sperrelement quer steht, wie in Fig. 3 gezeigt. Unter der Wirkung der Feder 70 und eines Gegenlagers, welches vom Abschnitt 42 gebildet wird, werden Stellorgan 20 und Sperrelement 30 nach oben bewegt, bis das Sperrelement 30 gegen korrespondierende Anlageflächen 54 der Schiene 50 anliegen. Der Montagebügel ist jetzt vormontiert.

Gleichzeitig mit den genannten Schritten oder anschließend wird die Klammer 40 so ausgerichtet, dass sie den Rand 62r des Kollektors 60 übergreift (Figur 2). Dabei stützt sich die Klammer 40 nicht nur mit der gabelartigen Erweiterung 49g auf dem verdickten Abschnitt 16 des Grundkörpers 10 ab, sondern auch mit dem hakenförmigen Abschnitt 44 auf einem Schenkel (in Figur2: rechts) des U-förmigen Abschnitts 18.2 des Grundkörpers 10; außerdem mit dem horizontalen Abschnitt 42 auf der Spiralfeder 70.

Anschließend wird das Stellorgan 20 beziehungsweise dessen hutförmiger Schraubenkopf 28 in das zweite Sperrelement 30 hineingeschraubt bis der Kollektor 60 über die Klammer 40 am Bügel befestigt ist und der Bügel über das Sperrelement 30 mit der Schiene 50 verbunden ist. Der fertige Montagezustand ergibt sich aus einer Zusammenschau der Figuren 1 bis 3.

Für die Montage wird lediglich ein Inbusschlüssel benötigt, um das Stellorgan 20 über die Inbusöffnung 28o zu bedienen.

Der dargestellte Montagebügel dient zur Montage eines Kollektors 60 am Ende eines üblichen Kollektorfeldes aus mehreren Kollektoren 60.

Um nebeneinander im Abstand liegende Kollektoren 60 zu montieren ist die Ausführungsform eines Montagebügels nach den Figuren 4 und 5 vorgesehen.

Diese unterscheidet sich von der Ausführungsform nach den Figuren 1 bis 3 dadurch, dass der Grundkörper 10 und die Klammer 40 spiegelbildlich zu einer gedachten Ebene E gestaltet sind, wobei die Ebene E die Mittenlängsachse M des Stellorgans 20 aufnimmt, wie sich aus Figur 4 ergibt.

Dabei weisen die beidseits der Ebene E verlaufenden Teile des Montagebügels jeweils eine konstruktive Gestaltung auf, wie sie anhand des ringförmigen Abschnitts 18.1 und des U-förmigen Abschnitts 18.2 vorstehend beschrieben wurde.

Ein hakenförmiger Abschnitt 44 der Klammer 40 liegt dann auf einer Glasabdeckung 62 eines ersten Kollektors 60 auf während ein korrespondierender hakenförmiger Abschnitt 44' der Klammer 40 auf einer Abdeckung 62' eines zweiten Kollektors 60' liegt. Die Fixierung des Montagebügels an der Schiene 50 bleibt unverändert.

Auch die Gestaltung des Stellorgans 20 und des zweiten Sperrelementes 30 ist unverändert zu der Ausführungsform nach den Figuren 1 bis 3.

Wie die Figuren zeigen wird ein Kollektor nur mit den genannten Montagebügeln befestigt. Für einen Wannenkollektor bedeutet dies, dass auf (zusätzliche) Befestigungen des Wannenteils verzichtet werden kann. Der Wannenteil kann dadurch dünner und leichter werden, weil er keine relevante statische Funktion mehr hat. Die Befestigung des Kollektors im Randbereich der transparenten Abdeckung hat den weiteren Vorteil, dass dadurch die Abdeckung selbst gegen Ablösen von der Kollektorwanne gesichert wird, zum Beispiel dann, falls sich eine Verklebung bei einer Glasabdeckung im Laufe der Zeit löst. Die Kombination von Wannenkollektor und Befestigungsbügel stelle deshalb eine vorteilhafte Baueinheit dar.

## Patentansprüche

1. Kombination von mindestens einem solartechnischen Wannenkollektor (60) und einem Montagebügel zur Befestigung des Wannenkollektors (60) mit einer transparenten Abdeckung (62') an einer Schiene (50) mit folgenden Merkmalen des Montagebügels:
1.1 einem Grundkörper (10),
1.2 einem Stellorgan (20) mit einem ersten Endabschnitt (26) und einem zweiten Endabschnitt (22),
1.3 das Stellorgan (20) durchgreift den Grundkörper (10),
1.4 am zweiten Endabschnitt (22) des Stellorgans (20) ist ein zweites Sperrelement (30) zur Befestigung des Montagebügels auf der Schiene (50) angeordnet,
1.5 am ersten Endabschnitt (26) des Stellorgans (20) sind eine Klammer (40) und ein erstes Sperrelement (28) zur Festlegung der Klammer (40) angeordnet, mit der der Wannenkollektor (60) am Montagebügel befestigt wird, wobei
1.6 die Klammer (40) an mindestens einem freien Ende eine in Richtung auf das zweite Sperrelement (30) weisende Abkröpfung (46) aufweist,
den Wannenkollektor (60) ausschließlich im Randbereich seiner transparenten Abdeckung (62') fixiert und sich auf mindestens einem Auflager (16) abstützt, das auf der dem ersten Sperrelement (28) gegenüberliegenden Seite der Klammer (40) angeordnet und Bestandteil des Grundkörpers (10) ist, wobei ein Schenkel des Grundkörpers (10) mit seinem freien Ende gegen eine Unterseite (62u) des Randbereichs (62r) der transparenten Abdeckung (62') anliegt.

2. Kombination nach Anspruch 1 mit mindestens zwei, im Abstand angeordneten Auflagern (16) für die Klammer (40).

3. Kombination nach Anspruch 2, bei der die zwei Auflager (16) auf gegenüberliegenden Seiten des Stellorgans (20) angeordnet sind.

4. Kombination nach Anspruch 1, deren Klammer (40) angenähert eine Z-Form oder eine W-Form in einer Seitenansicht aufweist.

5. Kombination nach Anspruch 1, bei der die Klammer (40) mit einem freien Ende (48e) die Schiene (50) seitlich abdeckt.

## Claims

1. Combination of at least one solar tub collector (60) and an assembling bracket to fix said tub collector (60) having a transparent cover (62') along a rail (50), having the following characteristics of the assembling bracket:
1.1 a base body (10),
1.2 an adjusting organ (20) with a first end part (26) and a second end part (22),
1.3 the adjusting organ (20) penetrates the base body (10),
1.4 at said second end part (22) of said adjusting organ (20) a second locking element (30) for fixation of said assembling bracket along said rail (50) is arranged,
1.5 at said first end part (26) of said adjusting organ (20) a clip 40 and a first locking element (28) for fixation of said clip (40) are arranged, to fix said tub collector (60) at said assembling bracket, wherein
1.6 said clip (40) provides along at least one free end a cranked section (46), directed toward said second locking element (30) and fixing the tub collector (60) exclusively in the rim area of said transparent cover (62'), being supported on at least one support (16) being part of said base body (10) and arranged on that side of clip (14) opposite to said first locking element (28), wherein one leg of said base body (10) abuts with its free end on the bottom side (62u) of said rim area (62r) of said transparent cover (62').

2. Combination of claim 1 with at least two supports (16) for said clip, arranged at a distance to each other.

3. Combination of claim 2, wherein the said two supports (16) are arranged at opposite sides of said adjusting organ.

4. Combination according to claim 1, the clip (40) of which provides approximately a Z-shape or a W-shape in a lateral view.

5. Combination according to claim 1, wherein the clip (40) laterally covers the rail (50) with a free end (48e).

## Revendications

1. Combinaison d'au moins un collecteur de cuve (60) héliosolaire et d'un étrier de montage pour la fixation du collecteur de cuve (60) avec un revêtement (62') transparent sur un rail (50) présentant les caractéristiques suivantes de l'étrier de montage :
1.1 un corps de base (10),
1.2 un organe de réglage (20) avec un premier tronçon d'extrémité (26) et un second tronçon d'extrémité (22),
1.3 l'organe de réglage (20) passe à travers le corps de base (10),
1.4 sur le second tronçon d'extrémité (22) de l'organe de réglage (20) est disposé un second élément de blocage (30) pour la fixation de l'étrier de montage sur le rail (50),
1.5 sur le premier tronçon d'extrémité (26) de l'organe de réglage (20) sont disposés une pince (40) et un premier élément de blocage (28) pour la fixation de la pince (40), avec laquelle le collecteur de cuve (60) est fixé sur l'étrier de montage,
1.6 la pince (40) présentant sur au moins une extrémité libre un coude (46) dirigé en direction du second élément de blocage (30),
fixe le collecteur de cuve (60) uniquement dans la zone périphérique de son revêtement (62') transparent et s'appuie sur au moins un support (16), lequel est disposé sur le côté, opposé au premier élément de blocage (28), de la pince (40) et est un élément constitutif du corps de base (10), une branche du corps de base (10) s'appuyant par son extrémité libre contre un côté inférieur (62u) de la zone périphérique (62r) du revêtement (62') transparent.

2. Combinaison selon la revendication 1 comprenant au moins deux supports (16), disposés à distance, pour la pince (40).

3. Combinaison selon la revendication 2, dans laquelle les deux supports (16) sont disposés sur des côtés opposés de l'organe de réglage (20).

4. Combinaison selon la revendication 1, dont la pince (40) présente approximativement une forme de Z ou une forme de W dans une vue latérale.

5. Combinaison selon la revendication 1, dans laquelle la pince (40) recouvre latéralement le rail (50) avec une extrémité libre (48e).
